Europäisches Patentamt

**European Patent Office**

**Office européen des brevets**

(11) Veröffentlichungsnummer: **0 043 486**
**A2**

## (12) EUROPÄISCHE PATENTANMELDUNG

(21) Anmeldenummer: 81104783.6

(22) Anmeldetag: 22.06.81

(51) Int. Cl.³: **A 23 K 1/16**

(30) Priorität: 04.07.80 DE 3025305

(43) Veröffentlichungstag der Anmeldung: 13.01.82
Patentblatt 82/2

(84) Benannte Vertragsstaaten: **CH DE FR GB LI NL**

(71) Anmelder: **HAARMANN & REIMER GMBH, Postfach 138,
D-3450 Holzminden (DE)**

(72) Erfinder: **Emberger, Roland, Dr., Bärenfang 4,
D-3450 Holzminden (DE)**
Erfinder: **Hansmann, Günther, Wiesenweg 56,
D-3450 Holzminden (DE)**

(74) Vertreter: **Mann, Volker, Dr. et al, c/o Bayer
Aktiengesellschaft Zentralbereich Patente Marken und
Lizenzen, D-5090 Leverkusen-Bayerwerk (DE)**

(54) **Aromamittel für Tierfutter.**

㊙ Tierfutter kann als Aromamittel 2-Methyl-3-mercapto-
thiophen und/oder 2-Ethyl-3-mercaptothiophen enthalten.
Durch Zusatz von 2-Methyl-3-mercaptothiophen und/oder
2-Ethyl-3-mercaptothiophen zu einem Tierfutter wird das
Aroma bzw. der Duft so verändert, daß es von den Tieren
bevorzugt wird.

EP 0 043 486 A2

0043486

Haarmann und Reimer GmbH

Holzminden
Mn/bc/c

## Aromamittel für Tierfutter

Die Erfindung betrifft ein neues Aromamittel für Tierfutter, ein Verfahren zum Verändern des Aromas bzw.
Duftes von Tierfutter und das nach dem Verfahren hergestellte Tierfutter.

Tiere, insbesondere Haustiere, bevorzugen bestimmte
Nahrungsmittel, wobei das Aroma eine ausschlaggebende
Rolle spielt. Aus diesem Grunde kommt der Aromatisierung von Tierfutter eine besondere Bedeutung zu.

Es wurde ein Aromamittel für Tierfutter gefunden, das
2-Methyl-3-mercaptothiophen oder 2-Ethyl-3-mercapto-
thiophen enthält.

Tierfutter mit dem erfindungsgemäßen Aromamittel wird
von den Tieren besonders bevorzugt.

2-Methyl-3-mercaptothiophen und 2-Ethyl-3-mercapto-
thiophen sind an sich bekannt (Arkiv Kemi 17, 237
(1960)) und können aus 2-Methyl-3-brom-thiophen bzw.
2-Ethyl-3-bromthiophen hergestellt werden.

HR 82 -Ausland

BAD ORIGINAL

2-Methyl-3-mercaptothiophen und 2-Ethyl-3-mercaptothio-
phen können einzeln oder im Gemisch verwendet werden.
Bevorzugtes Aromamittel für Tierfutter ist 2-Methyl-3-
mercaptothiophen.

Die Erfindung betrifft außerdem ein Verfahren zur Veränderung des Aromas bzw. Duftes von Tierfutter, das dadurch gekennzeichnet ist, daß man einem eßbaren Tierfutter 2-Methyl-3-mercapto-thiophen und/oder 2-Ethyl-
3-mercaptothiophen allein oder in Mischung mit üblichen Hilfsmitteln zusetzt.

Die Erfindung betrifft auch das nach dem vorstehend
beschriebenen Verfahren erhaltene Tierfutter.

Die erfindungsgemäßen Aromamittel werden im allgemeinen
einer eßbaren Form des Tierfutters zugesetzt, die selbstverständlich gegebenenfalls noch zu einer verzehrfertigen Form, beispielsweise durch Zusatz von Wasser oder
anderen Futterkomponenten, verändert werden kann.

Unter Tierfutter wird im allgemeinen übliches Futter
für vorwiegend fleischfressende Tiere, bevorzugt für
Hunde und Katzen, verstanden. Insbesondere handelt
es sich um handelsübliches Tierfutter auf pflanzlicher und/oder tierischer Basis, das in trockener
oder halbfeuchter Form oder als Naßfutter, beispielsweise als Konserve, verwendet wird.

Die erfindungsgemäßen Aromamittel für Tierfutter können entweder allein oder im Gemisch mit einem oder

HR 82

mehreren Hilfsmitteln eingesetzt werden. Dabei kommen als Hilfsmittel Verdicker, Netzmittel, Konditionierungsmittel, Aromatisierungsmittel und Duftverstärker in Frage.

Da der Schwellenwert der erfindungsgemäßen Aromamittel für Tierfutter sehr niedrig liegt, können sie in einer Menge von 1 ppb bis 100 ppm, vorzugsweise 10 ppb bis 10 ppm, bezogen auf das eßbare Tierfutter, zugesetzt werden.

Der Zusatz der Aromamittel zum Tierfutter kann in jedem geeigneten Zeitpunkt der Herstellung durch bekannte Techniken, wie Sprühtrocknung, Mischen oder Einrühren, erfolgen. Vorzugsweise erfolgt der Zusatz durch Einsprühen des fertigen Produktes mit einem Öl oder einer Fettlösung.

HR 82

Beispiel 1

Ein handelsübliches, als Hundevollnahrung mit Fleisch
und Gemüseanteilen deklariertes Trockenfutter wurde in
Verhältnis Futter zu Wasser von 1:2,6 rehydratisiert
und mit 100 ppm 2-Methyl-3-mercaptothiophen aromatisiert.
Mit diesem aromatisierten Futter sowie dem nichtaromatisierten wurde ein Präferenztest durchgeführt.

Die Tests wurden mit 10 Hunden unterschiedlicher Rassen,
die in Einzelkäfigen gehalten wurden, durchgeführt. Die
Tiere hatten die freie Auswahl zwischen zwei völlig
gleichartigen und gleichfarbigen Näpfen, die jeweils
die gleiche Menge aromatisierten und nichtaromatisierten
Futters enthielten. Das Futter wurde an 7 Tagen jeweils
2 Stunden zwischen 11 und 13 Uhr den Hunden angeboten,
wobei die Futtermenge für jeden Hund so bemessen war,
daß in der Regel nicht beide Näpfe vollständig geleert
wurden. War dies ausnahmsweise der Fall, wurde das Tier
an diesem Tag aus der Testauswertung herausgenommen.
Nach der Freßzeit wurde die in den Näpfen verbliebene
Restmenge zurückgewogen.

Von den 10 Hunden wurden im Mittel von dem aromatisierten Futter 61,3 %, von dem nichtaromatisierten Vergleichsfutter 38,7 % der angebotenen Futtermenge gefressen.

Bei einer Reduzierung der Menge an 2-Methyl-3-mercapto-
thiophen auf 1 ppm wurden im Mittel vom aromatisierten

HR 82

0043486

Futter 62,1 % und vom nichtaromatisierten Vergleichsfutter 43,2 % bei einer Reduzierung auf 10 ppb vom
aromatisierten Futter 52,2 % und vom nichtaromatisierten Vergleichsfutter 38,2 % aufgenommen.

Beispiel 2

Ein handelsübliches, als Vollkatzenfutter deklariertes
Trockenfutter wurde direkt mit 1 ppm 2-Methyl-3-mercapto-
thiophen aromatisiert und im Vergleich mit dem nichtaromatisierten Trockenfutter einem Präferenztest bei
Katzen unterzogen.

Der Test wurde mit 21 Tieren verschiedener Rassen, die
zu je 7 in 3 Käfigen gehalten wurden, durchgeführt.
Die Katzen hatten freie Auswahl zwischen 2 völlig
gleichartigen und gleichfarbigen Näpfen, die jeweils
gleiche Mengen aromatisierten und nichtaromatisierten
Futters enthielten. Das Futter wurde an 10 Tagen jeweils 4 Stunden zwischen 15 und 19 Uhr angeboten,
wobei die Futtermenge so bemessen war, daß nie beide
Näpfe vollständig geleert wurden. Nach der 4-stündigen Freßzeit wurde die in den Näpfen verbliebene Restmenge zurückgewogen.

Von den 21 Katzen wurden im Mittel von dem aromatisierten Futter 70,1 %, vom dem nichtaromatisierten
Vergleichsfutter 42,8 % gefressen.

HR 82

BAD ORIGINAL

Patentansprüche

1)  Aromamittel für Tierfutter, enthaltend 2-Methyl-
    3-mercaptothiophen und/oder 2-Ethyl-3-mercapto-
    thiophen.

2)  Verfahren zur Veränderung des Aromas bzw. Duftes
    von Tierfutter, das dadurch gekennzeichnet ist,
    daß man eßbarem Tierfutter 2-Methyl-3-mercapto-
    thiophen und/oder 2-Ethyl-3-mercaptothiophen allein
    oder in Mischung mit üblichen Hilfsmitteln zusetzt.

3)  Tierfutter, dadurch gekennzeichnet, daß es ein
    eßbares Tierfutter und 2-Methyl-3-mercaptothiophen
    und/oder 2-Ethyl-3-mercaptothiophen umfaßt.

HR 82